# EUROPEAN PATENT APPLICATION

(11) **EP 4 395 352 A1**
(43) Date of publication of application: **03.07.2024**
(21) Application number: 23216668.6
(22) Date of filing: 14.12.2023
(51) Int. Cl.: H04N 23/61, H04N 7/18, H04N 23/63, H04N 23/60, H04N 23/80, H04N 25/44, H04N 25/533, H04N 5/783

(54) **IMAGING SETTING APPARATUS, IMAGE PICKUP APPARATUS, VEHICLE, AND IMAGING SETTING METHOD**

(30) Priority: 28.12.2022 JP 2022211135
(71) Applicant: CANON KABUSHIKI KAISHA, Tokyo 146-8501 (JP)
(72) Inventor: MORI, Makiko, Tokyo, 146-8501 (JP)
(74) Representative: TBK

(57) **Abstract**

An imaging setting apparatus (17) acquires at least one of information about an environment around a vehicle (C) mounted with an image pickup apparatus that includes a single image sensor (12) configured to set a first pixel area (12a) for signal readout at a first frame rate and a second pixel area (12b) for signal readout at a second frame rate higher than the first frame rate, and information about the vehicle, and sets the second pixel area on the image sensor based on the at least one of the information about the environment and the information about the vehicle.

## Description

### BACKGROUND

### Technical Field

One of the aspects of the embodiments relates to an image pickup apparatus for use with an on-board (in-vehicle) camera, etc.

### Description of Related Art

An on-board camera monitoring system displays on an on-board monitor captured images in various directions outside a vehicle output from on-board cameras attached to the front, rear, side, etc. of the vehicle. A wide-angle camera is often used as an on-vehicle camera in order to enable the driver of the vehicle to recognize information around the vehicle (information about a course status, motions of surrounding objects, etc.) using a small number of on-vehicle cameras.

As an image pickup apparatus applicable to on-board cameras, Japanese Patent Laid-Open No. 2021-34786 and International Publication No. 2020/090511 disclose apparatuses that read signals out of two pixel areas on an image sensor and simultaneously generate two images. Japanese Patent Laid-Open No. 2021-34786 reads out a signal at a high frame rate from a pixel area where a moving object is detected. International Publication No. 2020/090511 reads a signal for generating an image to be displayed on an electronic room (indoor) mirror from one of two pixel areas, and a signal for generating an image to be displayed as a back monitor from the other of two pixel areas.

On the other hand, the on-board camera monitoring system is demanded to enable the driver to quickly recognize a vehicle, a person, and another object that suddenly show up from the driver's blind spot, such as an object that becomes visible after the driver's (or user's) vehicle starts turning to the left or right, a moving object that appears from a shield, and a fallen object that suddenly appears from an area that has been invisible due to a vehicle in front of the driver's vehicle (sometimes referred to as a preceding vehicle). Thus, the on-board camera is demanded to have high resolution and a high frame rate. However, it is difficult to satisfy imaging at a wide angle of view, high resolution, and a high frame rate due to limitations due to a transmission signal band from the image sensor to the image processing circuit and the processing load of an image processing circuit.

### SUMMARY

The present invention in its first aspect provides an imaging setting apparatus as specified in claims 1 to 14.

The present invention in its second aspect provides an image pickup apparatus as specified in claims 15 to 17.

The present invention in its third aspect provides a vehicle as specified in claim 18.

The present invention in its fourth aspect provides an imaging setting method as specified in claim 19.

The present invention in its fifth aspect provides a program as specified in claim 20.

Further features of the disclosure will become apparent from the following description of embodiments with reference to the attached drawings.

### BRIEF DESCRIPTION OF THE DRAWINGS

FIG. 1 is a block diagram illustrating the configuration of an on-board camera according to a first embodiment.
FIG. 2 illustrates the operation of an image sensor for use with the on-board camera according to the first embodiment.
FIGs. 3A, 3B, and 3C illustrate high frame rate (FR) areas in the first embodiment.
FIGs. 4A, 4B, and 4C illustrate a vehicle in front and a fallen object on an expressway.
FIG. 5 is a flowchart illustrating high FR area setting processing according to the first embodiment.
FIG. 6 is a flowchart illustrating another high FR area setting processing according to the first embodiment.
FIGs. 7A and 7B illustrate each distance in a second embodiment.
FIG. 8 illustrates an intersection in the second embodiment.
FIGs. 9A, 9B, and 9C illustrate high FR areas in the second embodiment.
FIG. 10 illustrates rearview imaging according to a third embodiment.

### DESCRIPTION OF THE EMBODIMENTS

In the following, the term "unit" may refer to a software context, a hardware context, or a combination of software and hardware contexts. In the software context, the term "unit" refers to a functionality, an application, a software module, a function, a routine, a set of instructions, or a program that can be executed by a programmable processor such as a microprocessor, a central processing unit (CPU), or a specially designed programmable device or controller. A memory contains instructions or programs that, when executed by the CPU, cause the CPU to perform operations corresponding to units or functions. In the hardware context, the term "unit" refers to a hardware element, a circuit, an assembly, a physical structure, a system, a module, or a subsystem. Depending on the specific embodiment, the term "unit" may include mechanical, optical, or electrical components, or any combination of them. The term "unit" may include active (e.g., transistors) or passive (e.g., capacitor) components. The term "unit" may include semiconductor devices having a substrate and other layers of materials having various concentrations of conductivity. It may include a CPU or a programmable processor that can execute a program stored in a memory to perform specified functions. The term "unit" may include logic elements (e.g., AND, OR) implemented by transistor circuits or any other switching circuits. In the combination of software and hardware contexts, the term "unit" or "circuit" refers to any combination of the software and hardware contexts as described above. In addition, the term "element," "assembly," "component," or "device" may also refer to "circuit" with or without integration with packaging materials.

Referring now to the accompanying drawings, a description will be given of embodiments according to the disclosure.

### FIRST EMBODIMENT

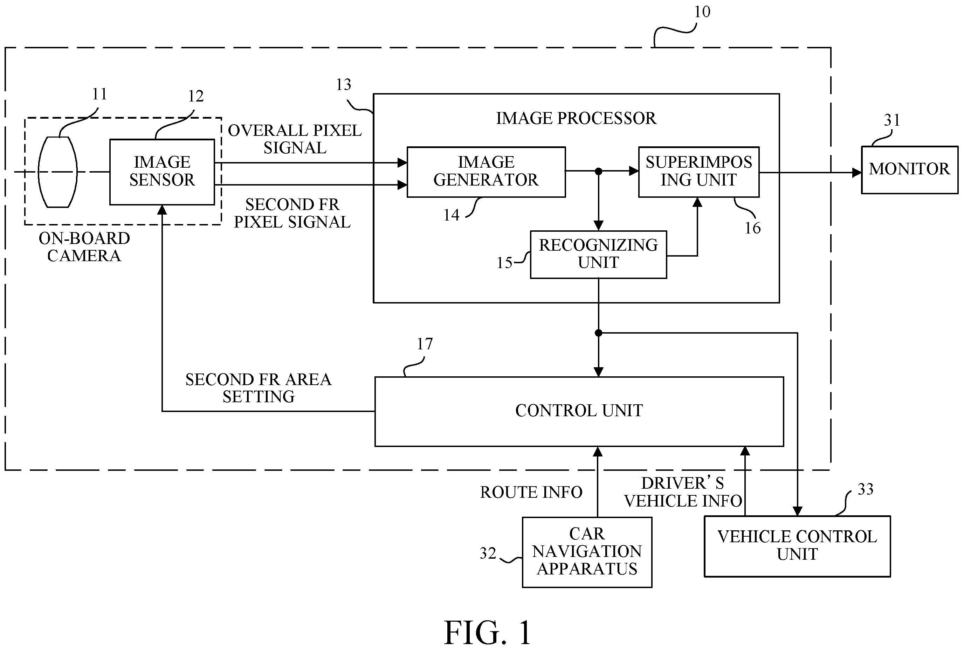

FIG. 1 illustrates the configuration of an on-board camera system 10 according to this embodiment. The on-board camera system 10 includes an on-board camera including an optical system 11 and an image sensor 12, an image processing unit 13, and a control unit 17 serving as an imaging setting apparatus. The on-board camera is fixed to the front or rear portion of a vehicle (body) as a movable body (movable member), and images the front view and rearview of the vehicle through a single optical system 11 and a single image sensor 12, respectively.

The optical system 11 is, for example, a wide-angle lens (such as a fisheye lens) having a maximum angle of view of 180°, and forms an optical image of an object (object image) in front of or behind the vehicle on the imaging surface of the image sensor 12.

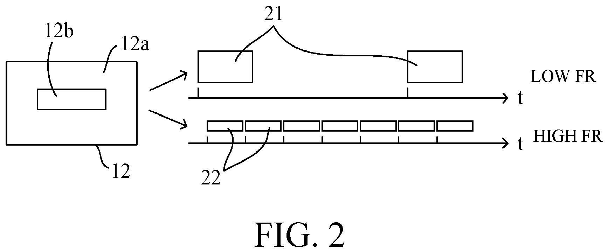

The image sensor 12 is a photoelectric conversion element, such as a CMOS sensor or a CCD sensor, including a plurality of pixels two-dimensionally arranged on its imaging surface. FIG. 2 illustrates an example of the operation of the image sensor 12, where t is time. The image sensor 12 can simultaneously read at different frame rates (referred to as FRs hereinafter) a pixel signal from a first pixel area (overall pixel area) 12a as the entire imaging surface, and a pixel signal from a second pixel area (partial pixel area) 12b smaller than the first pixel area 12a. That is, the image sensor 12 is configured to set the first pixel area 12a and the second pixel area 12b from which signals can be read out at different FRs. More specifically, pixel signals are read out of the first pixel area 12a at a cycle corresponding to the first FR (low FR), and pixel signals are read out of the second pixel area 12b at a cycle corresponding to the second FR (high FR) higher than the first FR (low FR). The following description will refer to the second pixel area as a high FR area.

The image processing unit 13 is an image processing computer including a GPU, etc., and includes an image generator 14, a recognizing unit 15, and a superimposing unit 16. The image generator 14 generates first image data 21 at the first FR from all pixel signals read out from the first pixel area 12a on the image sensor 12, and generates second image data 22 at the second FR from the high FR pixel signals read out of the high FR area 12b. The image processing unit 13 also performs image processing necessary to display the first and second image data 21 and 22. The image processing includes processing such as development, color space conversion, gamma adjustment, and distortion correction.

The recognizing unit 15 recognizes (detects) objects such as vehicles and people in the first image data and the second image data by template matching, AI processing using a machine learning model, etc. The recognizing unit 15 outputs the recognition result to the control unit 17 and the superimposing unit 16.

The superimposing unit 16 superimposes image information (frame, color, blinking, etc.) for making the object recognized by the recognizing unit 15 noticeable on the first or second image data for monitor display, and outputs the superimposed image data to a monitor (display) 31. The monitor 31 is a display apparatus provided on a dashboard or the like inside the vehicle. Viewing the object noticeably displayed on the monitor 31, the driver can perform a braking operation and a steering wheel operation to avoid a collision.

The control unit 17 is a microcomputer including a CPU, etc., and sets the high FR area 12b on the image sensor 12 based on information about an environment around the driver's vehicle (referred to as environment information hereinafter) and information about the driver's vehicle (referred to as driver's vehicle information hereinafter). The control unit 17 acquires environmental information such as objects, buildings, and intersections, around the driver's vehicle based on route information from a car navigation apparatus (or system) 32 mounted on the vehicle. The control unit 17 further acquires driver's vehicle information such as a traveling direction, the state of a turn signal (blinker), a steering angle, and a speed from a vehicle control unit 33 such as an Electronic Control Unit (ECU) mounted on the vehicle. The control unit 17 further acquires, from environmental information and driver's vehicle information, information about the course status of the driver's vehicle, such as information as to whether the course of the driver's vehicle is hidden by an object such as a vehicle in front, and information as to whether an object (movable body) is likely to enter the course of the driver's vehicle, and sets the high FR area 12b according to the status. At this time, the control unit 17 detects a blind spot area that is a blind spot from the driver using information on vehicles, trees, and other obstacles detected by the recognizing unit 15 from the first image data and information on intersections, buildings, etc. illustrated in the route information acquired from the car navigation apparatus 32. More specifically, the control unit 17 detects a blind spot caused by the vehicle in front driving on an expressway and a blind spot caused by a shield such as left and right buildings and walls at an intersection on general roads.

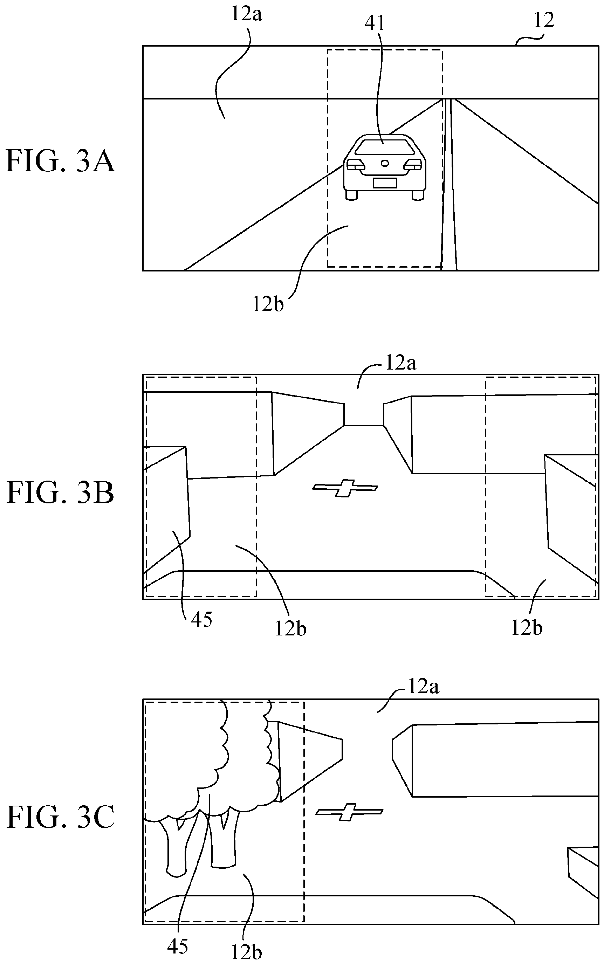

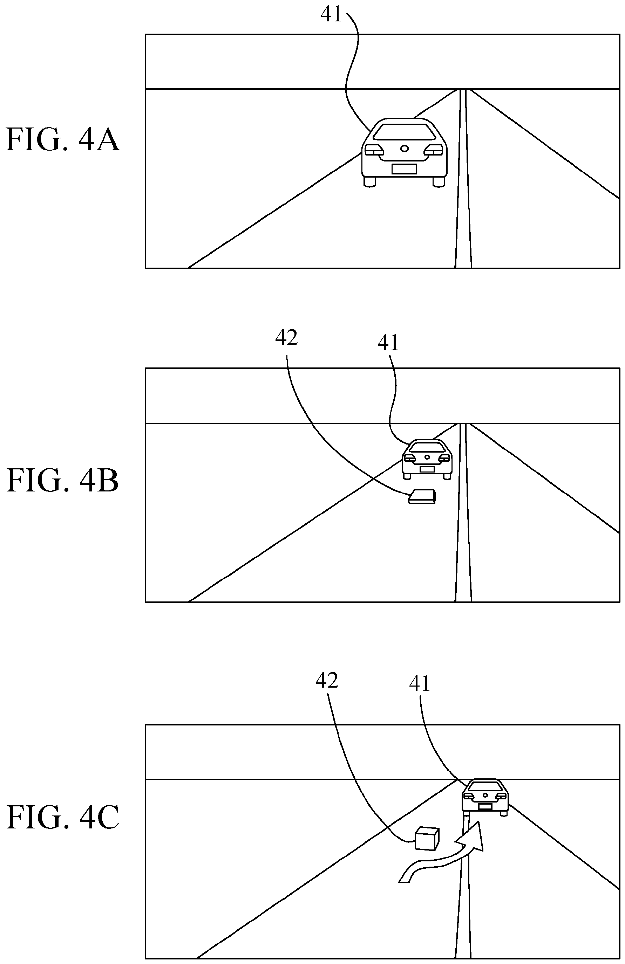

More specifically, as illustrated in FIG. 3A, for example, in an environment where there is no blind spot on the left and right sides, such as on an expressway or other automobile-only road, the control unit 17 sets as the high FR area 12b a central area including a preceding vehicle 41 that creates a blind spot and the road as illustrated by a dashed line frame. As illustrated in FIG. 4A, in a case where the driver's vehicle is driving behind the preceding vehicle 41 on the expressway and the preceding vehicle 41 moves on a thin object (fallen object) 42 and keeps moving straight as illustrated in FIG. 4B or the preceding vehicle 41 changes lanes to avoid a large object 42 as illustrated in 4C, the object 42 appears just in front of the driver's vehicle. Thus, by setting the central area on the image sensor 12 as the high FR area 12b, and generating the second image data at the high FR and displaying it on the monitor 31, the driver can easily recognize the object 42 that suddenly appears on the road. The recognizing unit 15 has a function of detecting the object 42 by image recognition processing to the second image data, and thereby detects the object 42 more quickly than a case where only the first image data is used, and the driver can be warned of the object 42.

As illustrated in FIGs. 3B and 3C, an environment where there is a risk that another vehicle or a person may run out from a shield 45 such as a building, a fence, and a tree that exists on at least one of the left and right sides at an intersection on general roads, the control unit 17 sets an area including the shield 45 and the nearby road as the high FR area 12b. For example, in a case where shields are located on both the left and right sides of a road, the control unit 17 sets as the high FR area 12b an area on one of the left and right sides of the road, which has an insufficient distance due to the vehicular lane (traffic zone) (an area on the left side in countries where people drive on the left side). In a case where two high FR areas 12b can be set, the high FR areas 12b may be set on both left and right sides. Before the driver's vehicle turns right or left, the high FR area 12b is set in an area on the turning side.

The control unit 17 sets a scanning direction that is used to read pixel signals for each line from the set high FR area 12b (direction in which the line extends) to a direction in which the number of lines to be scanned is smaller between the horizontal direction and the vertical direction. For example, as illustrated in FIGs. 3A, 3B, and 3C, in a case where the high FR area 12b has a vertically long shape, the scanning direction is set to the vertical direction (first direction) where the number of scanning lines is smaller than the horizontal direction (second direction), because the frame rate decreases as the number of scanning lines increases.

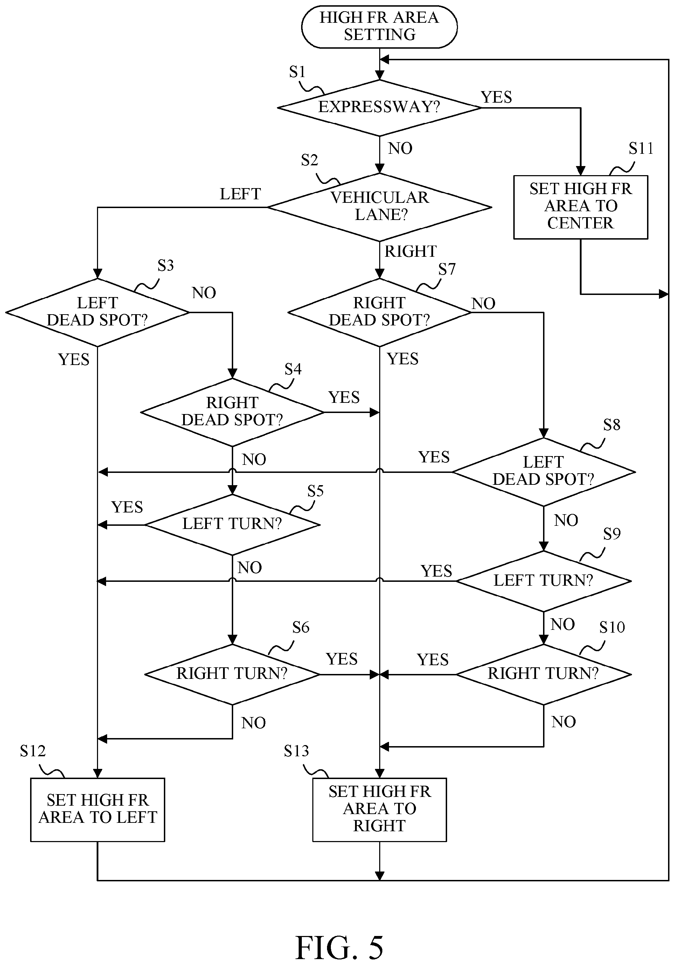

FIG. 5 illustrates the high FR area setting processing (imaging setting method) executed by the control unit 17 according to a computer program. In step S1, the control unit 17 determines whether or not the driver's vehicle is driving on an expressway based on the route information from the car navigation apparatus 32. In a case where the vehicle is driving on the expressway, the flow proceeds to step S11; otherwise, that is, in a case where the vehicle is driving on a general road, the flow proceeds to step S2.

In step S11 (setting step), the control unit 17 sets the high FR area 12b to the central area on the image sensor 12, as illustrated in FIG. 3A. Thereafter, the flow returns to step S1.

In step S2, the control unit 17 determines whether the vehicular lane on the general road is set to the left side or the right side, and in a case where it is set to the left side, the flow proceeds to step S3, and in a case where it is set to the right side, the flow proceeds to step S7.

In step S3, the control unit 17 determines whether the control unit 17 has recognized a left blind spot area. In a case where the control unit 17 has recognized the left blind spot area, the flow proceeds to step S12. In a case where the control unit 17 has not recognized the left blind spot area, the flow proceeds to step S4.

In step S12 (setting step), the control unit 17 sets the high FR area 12b to the left area on the image sensor 12, as illustrated in FIGs. 3B and 3C. Thereafter, the flow returns to step S 1.

In step S4, the control unit 17 determines whether the control unit 17 has recognized a right blind spot area. In a case where the control unit 17 has recognized the right blind spot area, the flow proceeds to step S13, and in a case where the control unit 17 has not recognized the right blind spot area, the flow proceeds to step S5.

In step S13 (setting step), the control unit 17 sets the high FR area 12b to the right area on the image sensor 12. Thereafter, the flow returns to step S1.

In step S5, the control unit 17 determines whether the driver's vehicle is going to turn left based on information such as a turn signal (blinker) and speed from the driver's vehicle information obtained from the vehicle control unit 33 and the route information obtained from the car navigation apparatus 32. In a case where the vehicle is going to turn left, the flow proceeds to step S12 and the control unit 17 sets the high FR area 12b to the left area on the image sensor 12; otherwise, the flow proceeds to step S6.

In step S6, the control unit 17 determines whether the driver's vehicle is going to turn right based on the information such as the turn signal and speed, and the route information. In a case where the vehicle is going to turn right, the flow proceeds to step S13 and the control unit 17 sets the high FR area 12b to the right area on the image sensor 12; otherwise, the flow proceeds to step S12 and the control unit 17 sets the high FR area 12b to the left area on the image sensor 12.

In a case where the control unit 17 has determined in step S2 that the vehicular lane is set to the right side, the flow proceeds to step S7, and the control unit 17 determines whether or not the control unit 17 has recognized the right blind spot area. In a case where the control unit 17 has recognized the right blind spot area, the flow proceeds to step S13, and the control unit 17 sets the high FR area 12b to the right area on the image sensor 12. In a case where the control unit 17 has not recognized the right blind spot area, the flow proceeds to step S8.

In step S8, the control unit 17 determines whether or not the control unit 17 has recognized the left blind spot area. In a case where the control unit 17 has recognized the left blind spot area, the flow proceeds to step S12 and the control unit 17 sets the high FR area 12b on the left area on the image sensor 12. In a case where the control unit 17 has not recognized the left blind spot area, the flow proceeds to step S9.

In step S9, the control unit 17 determines whether or not the driver's vehicle is going to turn left based on the information such as the turn signal and speed from the vehicle control unit 33 and the route information from the car navigation apparatus 32. In a case where the control unit 17 determines that the vehicle is going to turn left, the flow proceeds to step S12 and the control unit 17 sets the high FR area 12b to the left area on the image sensor 12. Otherwise, the flow proceeds to step S10.

In step S10, the control unit 17 determines whether or not the driver's vehicle is going to turn right based on information such as the turn signal and speed and the route information. In a case where the vehicle is going to turn right, the flow proceeds to step S13 and the control unit 17 sets the high FR area 12b to the right area on the image sensor 12. Even in a case where the vehicle is not going to turn right, the flow proceeds to step S13 and the control unit 17 sets the high FR area 12b to the right area on the image sensor 12. Step S10 may be omitted and in a case where the control unit 17 determines in step 9 that the driver's vehicle is not going to turn left, the flow may directly proceed to step S13.

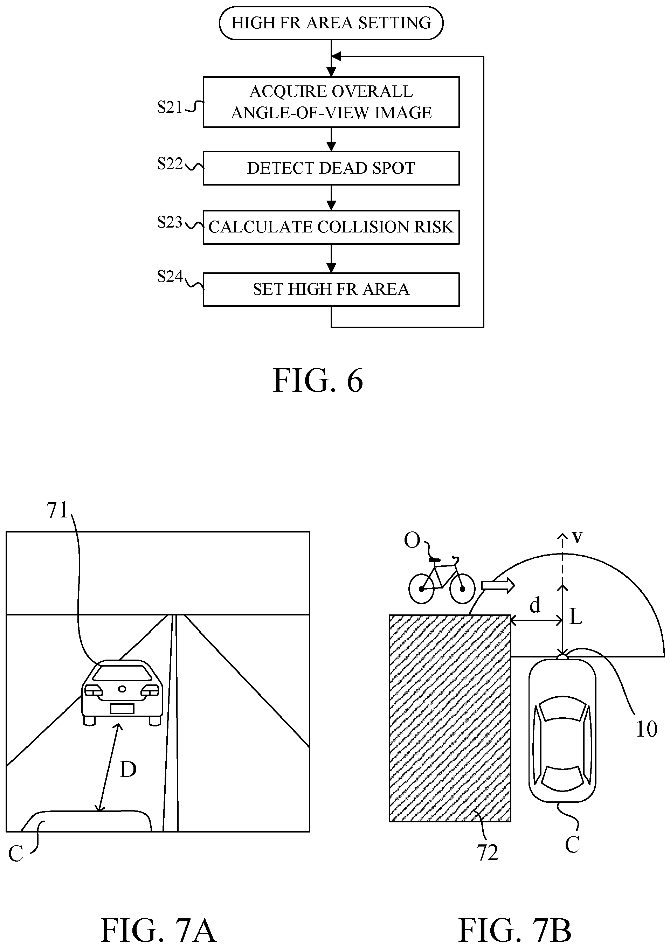

FIG. 6 illustrates high FR area setting processing different from that illustrated in FIG. 5, which is executed by the control unit 17 according to a computer program.

In step S21, the control unit 17 acquires first image data as an overall pixel (overall angle of view) image from the image processing unit 13.

Next, in step S22, the control unit 17 detects a blind spot area from the first image data.

Next, in step S23, the control unit 17 calculates a collision risk level indicating a likelihood of collision with an object on the course of the driver's vehicle using the detected blind spot area, the above environmental information, and the driver's vehicle information. At this time, the control unit 17 calculates the collision risk level in the center area, left area, and right area in the driving direction of the driver's vehicle while giving proper weights to the following items:
▪ The route cannot be seen from the driver's vehicle,
▪ A blind spot is located near the course of the driver's vehicle,
▪ Distance between the vehicle's course and blind spot,
▪ Distances to surrounding vehicles (a vehicle in front and a vehicle driving alongside), and
▪ Driving direction and speed of the driver's vehicle.

Next, in step S24 (setting step), the control unit 17 sets the high FR area 12b to an area on the image sensor 12 corresponding to an area with the highest collision risk level among the center area, left area, and right area. Then, the flow returns to step S21.

In a case where a plurality of areas as the highest collision risk level are detected in step S23, the control unit 17 sets in step S24 the high FR area 12b to an area where a distance calculated from the first image data using a known method or measured by an unillustrated distance measuring sensor is shorter.

In a case where the recognizing unit 15 detects an object (such as a moving object) from the second image data acquired from the high FR area 12b generated using pixel signals from the high FR area 12b set in the above high FR area setting processing, the recognizing unit 15 outputs the information to the superimposing unit 16. Since a plurality of frames are required for moving object detection, a delay in moving object detection can be prevented because the FR of the second image data is high.

The recognizing unit 15 also outputs information about the detected object to the vehicle control unit 33. Upon receiving the information, the vehicle control unit 33 operates a safety function such as a collision mitigation brake to reduce or avoid a collision with an object.

This embodiment enables the on-board camera system 10 to perform wide angle-of-view imaging and imaging at high resolution and high FR suitable to detect an object appearing from a blind spot. Thereby, this embodiment allows the vehicle to drive more safely. In particular, since the time required to detect an object appearing from a blind spot can be shortened, the collision avoiding performance of the vehicle can be further improved.

The image processing unit 13 may output at least one of the first and second image data generated by pixel signals from the first and second pixel areas 12a and 12b, for sensing to detect the presence of an object near the vehicle.

### SECOND EMBODIMENT

The first embodiment sets a high FR area at a position (center, left, or right area) according to a condition such as a location (expressway or intersection), a vehicular lane, the presence or absence of a blind spot, and a right or left turn. This embodiment changes the position of the high FR area, the size of the high FR area, and the FR of the high FR area according to more conditions.

First, an object that may appear from the blind spot is limited according to the location. For example, on an expressway, as illustrated in FIGs. 4B and 4C, the object 42 as a fallen object may appear from a blind spot due to a vehicle in front, or a merging (or junctioning) vehicle may appear from behind a block causing a blind spot near an interchange or service area. On the other hand, at an intersection on a general road, various objects such as a vehicle (crossing vehicle), a bicycle, a person, a ball children were playing with may enter the intersection from the left and right sides from behind the shield 45 such as a building, a fence, and a tree around the intersection, as illustrated in FIGs. 3B and 3C.

Thus, the position, size, and FR of the high FR area may be changed according to the type of object that may appear for each location and the relative relationship between the object and the driver's vehicle (relative distance and relative speed). In addition, the size (width and height) of the high FR area may be changed according to the size of the shield that causes the blind spot, because the object size that provides the shadow is limited according to the shield size that causes the blind spot. Since the position of the object that appears from behind the shield is determined by the shield position, the high FR area may be at a position that includes the position.

The upper limit of the speed of the object that may appear for each location is limited. Hence, a high FR area having a sufficient size (width) may be set to detect the motion of the object for each location. For example, the width of the high FR area may increase as the speed of the object increases.

The damage level to the vehicle or object is determined by the type of object and the speed relative to the driver's vehicle. More specifically, the damage level is high in a case where the object is a vehicle, bicycle, or person (adult or child), but the damage level is low in a case where the object is a ball. Since an object with a higher damage level need to be detected faster, the FR in the high FR area may be set to be higher.

Table 1 summarizes examples of the types of objects that may appear from the blind spot for each location and the position, size, and FR of the high FR area to be set.

**TABLE 1**

| | | | | | HIGH FR AREA | | | |
|---|---|---|---|---|---|---|---|---|
| LOCATION | CAUSE OF BLIND SPOT | OBJECT THAT MAY APPEAR | SPEED (km/h) | DAMAGE LEVEL | POSITION | SIZE | FRAME RATE | |
| EXPRESSWAY | VEHICLE IN FRONT | FALLEN OBJECT | 0 (STATIO -NARY) | MIDDLE | CENTER INCLUDING VEHICLE IN FRONT | SIZE INCLUDING VEHICLE IN FRONT | DEPENDING ON DISTANCE BETWEEN VEHICLES AND SPEED OF DRIVER'S VEHICLE | |
| | BLOCK | MERGING VEHICLE | ~120 | HIGH | SIDE INCLUDING END PORTION OF CAUSE OF BLIND SPOT | DEPENDING ON SIZE AND SPEED OF OBJECT | DEPENDING ON RELATIVE SPEED BETWEEN MERGING | |
| INTERSECTION ON THE STREET | BUILDING/ FENCE | CROSSING VEHICLE | ~58 | HIGH | | | DEPENDING ON OBJECT SPEED AND DAMAGE LEVEL | VEHICLE AND DRIVER'S VEHICLE AND SPEED OF DRIVER'S VEHICLE |
| | | BICYCLE | ~20 | HIGH | | | | |
| | | PERSON | ~5 | HIGH | | | | |
| | | BALL | ~ DOZENS OF | LOW | | | | |
| | VEHICLE IN FRONT | FALLEN OBJECT | 0 (STATIO -NARY) | LOW | CENTER INCLUDING VEHICLE IN FRONT | SIZE INCLUDING VEHICLE IN FRONT | DEPENDING DISTANCE VEHICLES AND OF DRIVER'S ON BETWEEN SPEED VEHICLE | |
| | PARKED VEHICLE | ADULT/ CHILD | ~5 | HIGH | SIDE INCLUDING END PORTION OF CAUSE OF BLIND SPOT; POSITION INCLUDING HEAD ON UPPER SIDE | WIDTH 1-2 m & LENGTH 2 m | DEPENDING ON TIME REQUIRED TO ENTER COURSE OF DRIVER'S VEHICLE | |
| | SHORT OBJECT (PLANTING ETC.) | CHILD | ~5 (RUNNING) | HIGH | | | | |

On an expressway, in a case where a vehicle in front is the cause of a blind spot, the high FR area is set to a position (center area) and size including the vehicle in front for a fallen object (stationary or damaged) that may appear from the blind spot. The FR in the high FR area is set to be higher as a distance D between a driver's vehicle C and a preceding vehicle 71 shown in FIG. 7A becomes shorter, and as the speed of the driver's vehicle becomes higher. The time usable to detect a fallen object appearing from behind the preceding vehicle 71 becomes shorter as the distance D between the driver's vehicle C and the preceding vehicle 71 becomes shorter and as the speed v of the driver's vehicle becomes higher. Therefore, as the usable time becomes shorter, the FR of the high FR area becomes higher.

In a case where a block causes a blind spot on an expressway, the high FR area is set to the side (merging or junction side) including an end portion of the block so as to have a size determined according to the size and speed of a merging vehicle (denoted as object in the table) for the merging vehicle (at an assumed maximum speed of 120 km/h and causing high damage) that may appear from the blind spot. The FR in the high FR area is set according to the relative speed between the merging vehicle and the driver's vehicle and the speed of the driver's vehicle (relative speed with the shield).

In a case where a shield such as a building and a fence causes a blind spot at an intersection on general roads (intersection on the street), the high FR area is set to a position that includes an end portion of the shield so as to have a size determined according to the size and speed of a crossing vehicle(at an assumed maximum speed of 50 km/h and causing high damage). The FR at the high FR area is set to be higher as the speed of the crossing vehicle is higher.

A bicycle (at an assumed maximum speed of 20 km/h and causing high damage), a person (at an assumed maximum speed of 5 km/h and causing high damage), and a ball (at an assumed maximum speed of several tens of km/h and causing low damage) may run out from behind the shield. For these objects, the position and size of the high FR area are set according to the size and speed of the object, as in the case of a crossing vehicle, and as the object speed increases, the FR of the high FR area is set to be higher. That is, as illustrated in FIG. 7B, the FR becomes higher as the time usable to detect the object that has appeared becomes shorter, which is determined by distance d from the shield 72 to the course of the driver's vehicle, distance L from the driver's vehicle C to a point where collision with the object O may occur, and speed v of the driver's vehicle C.

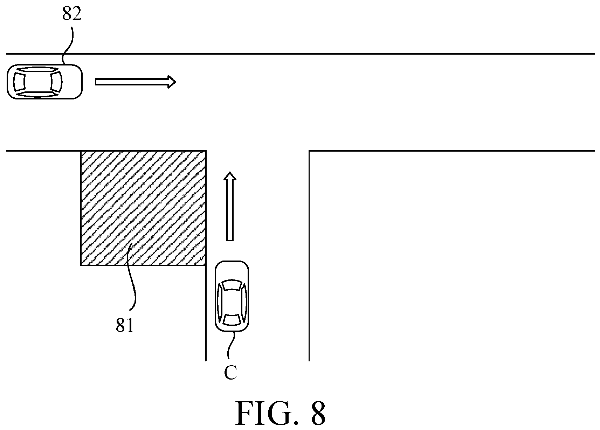

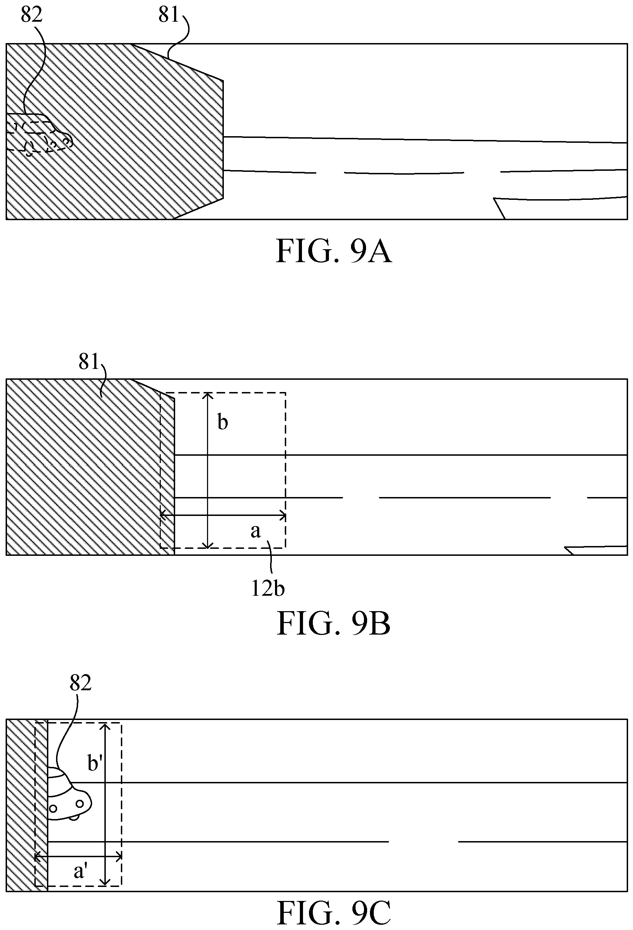

FIGs. 8 and 9A illustrate a situation where there is a shield 81 (illustrated by a beveled line) near the intersection that causes a blind spot, and the driver's vehicle C cannot see a crossing vehicle 82 approaching the intersection from the left. FIG. 9B illustrates a situation in which the driver's vehicle C is closer to the intersection than that in FIG. 9A. At this time, the high FR area 12b is set to have a height b corresponding to the height of the shield 81 and a width a corresponding to the speed of the crossing vehicle 82. At this time, since the width a of the high FR area 12b is smaller than the height b, the scanning direction of the high FR area 12b is set to the vertical direction, which is the direction of the height b.

As the driver's vehicle and the crossing vehicle 82 approach the intersection more closely than those in FIG. 9B, as illustrated in FIG. 9C, most of the shield 81 becomes invisible and the crossing vehicle 82 begins to be seen from behind the shield 81. At this time, the high FR area 12b is set to have a width a' narrower than a and a height b' higher than b on the left end side of the image sensor 12 than in FIG. 9B. b' is set higher than b because as the driver's vehicle approaches the intersection, the shield 81 moves to the edge of the angle of view and also becomes larger in the vertical direction, so the high FR area 12b may be made higher. On the other hand, a' is set narrower than a because the angle of view becomes wider that the driver can view as the driver's vehicle approaches the intersection, the driver can easily recognize the crossing vehicle 82, and the high FR area 12b required to detect the approach of the crossing vehicle 82 may be made narrower. Moreover, a moving amount of the crossing vehicle 82 per unit time becomes smaller on the image, and thus the high FR area 12b required to detect the movement may be made narrower. The scanning direction of the high FR area 12b in the state illustrated in FIG. 9C is maintained in the vertical direction.

Even at the intersection, the vehicle in front may cause a blind spot, and a fallen object (stationary, with low damage) may appear from the blind spot. Even in this case, the high FR area is set at a position (central area) and size including the vehicle in front. The FR in the high FR area is set to be higher as the distance between the driver's vehicle and the vehicle in front becomes shorter, and higher as the driver's vehicle speed becomes higher. Since the damage level is low, the FR is set lower than that on the expressway.

In a case where a short shield such as a parked vehicle or planting near the intersection causes a blind spot, a person or a child (at an assumed maximum speed of 5 km/m and causing high damage) may run out. In this case, the high FR area is set to the side including the end of the vehicle or shield (on the side of the lane of the driver's vehicle) with a size corresponding to the size and speed of the person or child (such as a width of 1 to 2 m and a height of 2m). The FR in the high FR area is set according to the time required for a person or child to enter the course of the driver's vehicle so that the FR becomes higher as the time becomes shorter.

This embodiment can properly set the high FR area by changing the position, size, and FR of the high FR area according to the location, the cause of the blind spot, and the type of object that may appear from the blind spot.

### THIRD EMBODIMENT

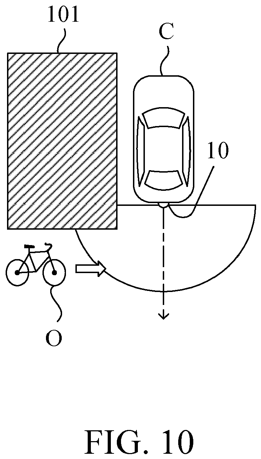

FIG. 10 illustrates a state in which the driver's vehicle C is backing up along a shield 101. The on-board camera system 10 images the rearview of the vehicle C. FIG. 10 illustrates a state just before an object (bicycle) O rushes out from behind the shield 101 such as a building.

Even in a case where the vehicle C backs up in this way, setting the high FR area as in the first and second embodiments enables the driver to recognize the object O appearing from behind the shield 101 more quickly.

In each of the above embodiments, the second pixel area is set within the overall pixel area as the first pixel area, but the first pixel area and the second pixel area may be set separately. For example, the left area and right area in FIG. 3A may be set as the first pixel area, and the center area may be set as the second pixel area.

A camera system similar to the on-board camera system according to each embodiment may be mounted on a moving object other than a vehicle.

### OTHER EMBODIMENTS

Embodiment(s) of the disclosure can also be realized by a computer of a system or apparatus that reads out and executes computer-executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer-executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer-executable instructions. The computer-executable instructions may be provided to the computer, for example, from a network or the storage medium. The storage medium may include, for example, one or more of a hard disk, a random-access memory (RAM), a read-only memory (ROM), a storage of distributed computing systems, an optical disc (such as a compact disc (CD), digital versatile disc (DVD), or Blu-ray Disc (BD)^{™}), a flash memory device, a memory card, and the like.

While the disclosure has been described with reference to embodiments, it is to be understood that the disclosure is not limited to the disclosed embodiments. The scope of the following claims is to be accorded the broadest interpretation so as to encompass all such modifications and equivalent structures and functions.

Each embodiment can cause the image pickup apparatus to perform imaging at a wide angle of view and imaging at high resolution and high frame rate necessary to detect an object appearing from a blind spot.

An imaging setting apparatus (17) acquires at least one of information about an environment around a vehicle (C) mounted with an image pickup apparatus that includes a single image sensor (12) configured to set a first pixel area (12a) for signal readout at a first frame rate and a second pixel area (12b) for signal readout at a second frame rate higher than the first frame rate, and information about the vehicle, and sets the second pixel area on the image sensor based on the at least one of the information about the environment and the information about the vehicle.

## Claims

1. An imaging setting apparatus (17) comprising:
an acquiring unit (17) configured to acquire at least one of information about an environment around a vehicle mounted with an image pickup apparatus that includes a single image sensor (12) configured to set a first pixel area (12a) for signal readout at a first frame rate and a second pixel area (12b) for signal readout at a second frame rate higher than the first frame rate, and information about the vehicle, and
a setting unit (17) configured to set the second pixel area on the image sensor based on the at least one of the information about the environment and the information about the vehicle.

2. The imaging setting apparatus according to claim 1, **characterized in that** the setting unit is configured to change at least one of a position and a size of the second pixel area, and the second frame rate based on the at least one of the information about the environment and the information about the vehicle.

3. The imaging setting apparatus according to claim 1 or 2, **characterized in that** the setting unit is configured to set the second pixel area to include an area that is a blind spot from a driver of the vehicle.

4. The imaging setting apparatus according to any one of claims 1 to 3, **characterized in that** the acquiring unit is configured to acquire the information about the environment from a car navigation apparatus (32) mounted on the vehicle.

5. The imaging setting apparatus according to claim 4, **characterized in that** the acquiring unit is configured to acquire, as the information about the environment, information about whether a road on which the vehicle is driving is an automobile-only road or a general road.

6. The imaging setting apparatus according to any one of claims 1 to 5, **characterized in that** the acquiring unit is configured to acquire the information about the environment from an image generated using a signal read out from the first pixel area.

7. The imaging setting apparatus according to claim 6, **characterized in that** the acquiring unit is configured to acquire, as the information about the environment, information about an object that causes a blind spot from a driver of the vehicle.

8. The imaging setting apparatus according to any one of claims 1 to 7, **characterized in that** the acquiring unit is configured to acquire, as the information about the vehicle, at least one of a moving direction, a turn signal, a steering angle, and a speed of the vehicle.

9. The imaging setting apparatus according to claim 5, the setting unit is configured to set the second pixel area to include a moving object in front of the vehicle or a moving object merging the vehicle on the automobile-only road.

10. The imaging setting apparatus according to claim 5, **characterized in that** the setting unit is configured to set the second pixel area on a side where the vehicle turns at an intersection of the general road.

11. The imaging setting apparatus according to any one of claims 1 to 10, **characterized in that** the setting unit is configured to acquire a likelihood of collision between an object appearing from a blind spot area and the vehicle, and sets the second pixel area based on the likelihood of collision.

12. The imaging setting apparatus according to claim 3, **characterized in that** in a case where there are a plurality of areas that cause the blind spot, the setting unit is configured to set the second pixel area to include one of the plurality of areas having the shortest distance from the vehicle.

13. The imaging setting apparatus according to claim 11, **characterized in that** the setting unit is configured to acquire a type of object that may appear from the blind spot area, and determines a position and size of the second pixel area and a second frame rate according to the type.

14. The imaging setting apparatus according to any one of claims 1 to 13, **characterized in that** the setting unit is configured to set one of a horizontal direction and a vertical direction, in which the number of lines to be scanned is smaller in reading a signal from the second pixel area.

15. An image pickup apparatus mounted on a vehicle (C), the image pickup apparatus comprising:
the imaging setting apparatus (17) according to any one of claims 1 to 14;
an image sensor (12) configured to set a first pixel area (12a) for signal readout at a first frame rate and a second pixel area (12b) for signal readout at a second frame rate higher than the first frame rate; and
an image generator (14) configured to generate a first image at a first frame rate using a signal read out of the first pixel area, and a second image at a second frame rate using a signal read out of the second pixel area,

16. The image pickup apparatus according to claim 15, further comprising a first outputting unit (13) configured to output the first image and the second image for display on a monitor.

17. The image pickup apparatus according to claim 15 or 16, further comprising a second outputting unit (13) configured to output at least one of the first image and the second image for sensing an object near the vehicle.

18. A vehicle (C) comprising:
the image pickup apparatus according to any one of claims 15 to 17; and
a body mounted with the image pickup apparatus.

19. An imaging setting method comprising the steps of:
acquiring at least one of information about an environment around a vehicle mounted with an image pickup apparatus that includes a single image sensor (12) configured to set a first pixel area (12a) for signal readout at a first frame rate and a second pixel area (12b) for signal readout at a second frame rate higher than the first frame rate, and information about the vehicle; and
setting the second pixel area on the image sensor based on the at least one of the information about the environment and the information about the vehicle.

20. A program that causes a computer to execute the imaging setting method according to claim 19.
